# EUROPEAN PATENT SPECIFICATION

(11) **EP 2 279 912 B1**
(45) Date of publication and mention of the grant of the patent: **25.09.2013**
(21) Application number: 09730125.3
(22) Date of filing: 07.01.2009
(51) Int. Cl.: B60R 11/02, G01C 21/00

(54) **ELECTRONIC DEVICE**
ELEKTRONISCHE EINRICHTUNG
DISPOSITIF ÉLECTRONIQUE

(30) Priority: 10.04.2008 JP 2008102871
(43) Date of publication of application: 02.02.2011
(73) Proprietor: Fujitsu Ten Limited, Hyogo 652-8510 (JP)
(72) Inventor: OZAKI, Yukisuke, Kobe-shi Hyogo 652-8510 (JP)
(74) Representative: Ward, James Norman
(86) International application number: PCT/JP2009/050051
(87) International publication number: WO 2009/125611

(56) References cited:
- JP-A- 2000 021 148
- JP-A- 2005 038 487
- JP-A- 2005 038 487
- JP-A- 2006 216 236
- JP-A- 2006 218 953
- JP-A- 2006 335 260
- JP-A- 2006 335 260

## Description

### FIELD OF THE INVENTION

The present invention relates to an electronic device in which a cover member is movable against a main unit.

### BACKGROUND OF THE INVENTION

As conventional navigation apparatuses, there are widely known small-sized portable navigation apparatuses with simplified structure and portability (hereinafter, referred to as Portable Navi), also known as Personal Navigation Device; and vehicle-mounted navigation apparatuses accommodated and fixed in a recess portion (DIN opening) formed in a dashboard of a vehicle. The vehicle-mounted navigation apparatuses are capable of guiding with high accuracy by use of the information supplied from vehicles such as vehicle speed, and some of the vehicle-mounted navigation apparatuses are equipped with audio devices.

In recent years, the navigation apparatuses with portability of the Portable Navi and high-accuracy guide function of the in-vehicle navigation apparatus have been studied.

References 1 to 4 disclose a configuration where a navigation portion can be attached and detached to/from an in-vehicle apparatus mounted in a vehicle. By removing the navigation portion from the in-vehicle apparatus, the navigation portion can be used as a Portable Navi of a single unit.

Also, as disclosed in Reference 5, the navigation apparatus is taken out of the vehicle and can be used while walking. In addition, when mounted in a vehicle, the navigation apparatus is in a car-navigation mode, and when taken out of the vehicle, the navigation apparatus is in a person-navigation mode.

In Reference 6, there has been disclosed a vehicle-mounted electronic device including a main unit, a display panel, and an operation panel. In the vehicle-mounted electronic device, a user depresses a button of the operation panel, so that a tilt angle of the display panel against the main unit can be adjusted, and the tilt angle of the display panel can be changed to an angle where the user sees the display panel easily.
[Reference 1] Japanese Unexamined Patent Publication No. 8-318792
[Reference 2] Japanese Unexamined Patent Publication No. 2002-328026
[Reference 3] Japanese Unexamined Patent Publication No. 2005-524570
[Reference 4] Japanese Unexamined Patent Publication No. 2001-239895
[Reference 5] Japanese Unexamined Patent Publication No. 2003-166848
[Reference 6] Japanese Unexamined Patent Publication No. 2006-312366

JP 2005038487 discloses an on-vehicle information device and media ejection indicating method for allowing a media ejecting operation to be performed despite the device being provided with an invertible monitor covering a media insertion hole.

JP 2006335260 discloses an electronic device according to the preamble of claim 1 including an inclining mechanism of a cover member of audio equipment, for adjusting an inclination angle of the cover member across a range of angles.

### DISCLOSURE OF THE INVENTION

### Problems to be Solved by the Invention

However, in the above-mentioned vehicle-mounted electronic device of Reference 6, timing in which the display panel begins the tilt is a time point when a given time period has passed from depression of the button. Therefore, although the user has not separated his finger from the button by long depression, the display panel protrudes toward a direction of a front face thereof. Accordingly, the direction where the user depresses the button and the protruding direction of the display panel are opposite, which ergonomically gives the user a sense of discomfort.

The present invention has been made in view of the above circumstances, and an object of the present invention is to provide an electronic device that can offer a user a comfortable operating environment of an instruction portion.

### Means to Solve the Problems

To attain the above object, according to a first aspect of the present invention, there is provided an electronic device, including: a main unit; a cover member that is movable against the main unit; an instruction portion that inputs an operation instruction of the cover member against the main unit, and is provided on the cover member; a driving portion that drives the cover member based on the instruction input by the instruction portion; a first detection portion that detects that the instruction portion is long and short depressed; a second detection portion that detects that the long depression detected by the first detection portion is completed; and a control portion that controls the driving portion so that the cover member operates against the main unit after the long depression is completed.

With this construction, the cover member on which the instruction portion is provided operates against the main unit after the long depression is completed, and it is therefore possible to offer a user a comfortable operating environment of an instruction portion.

### Effects of the Invention

In accordance with the present invention, it is possible to offer a user a comfortable operating environment of an instruction portion.

### BRIEF DESCRIPTION OF THE DRAWINGS

FIG. 1 is a diagram showing an exterior shape of a vehicle-mounted system including a vehicle-mounted device as an example of an electronic device in accordance with a present embodiment;
FIG. 2 is a diagram showing a front face portion of the vehicle-mounted device from which a portable device is detached;
FIG. 3A is a diagram showing a state of tilting the front face portion against a main unit to expose an insertion/ejection slot;
FIG. 3B is a diagram showing a state where the front face portion and the main unit are seen from a side of a left-side face;
FIG. 4 is a diagram showing an example of mounting the vehicle-mounted system in a vehicle;
FIG. 5 is a block diagram showing a schematic configuration of the vehicle-mounted system;
FIG. 6 is a diagram showing a configuration of the front face portion of the vehicle-mounted device;
FIG. 7A shows a front view, a top view, a bottom view, a left-side view, and a right-side view of the portable device;
FIG. 7B shows a back view of the portable device;
FIG. 8 is a flowchart showing a process which a controller of the vehicle-mounted device executes; and
FIG. 9 is a perspective diagram showing a navigation device that mounts no portable device therein, and is capable of tilting the front face portion against the main unit.

### DESCRIPTION OF THE PREFERRED EMBODIMENTS

The following is a detailed description of preferred embodiments of the present invention, with reference to the accompanying drawings.

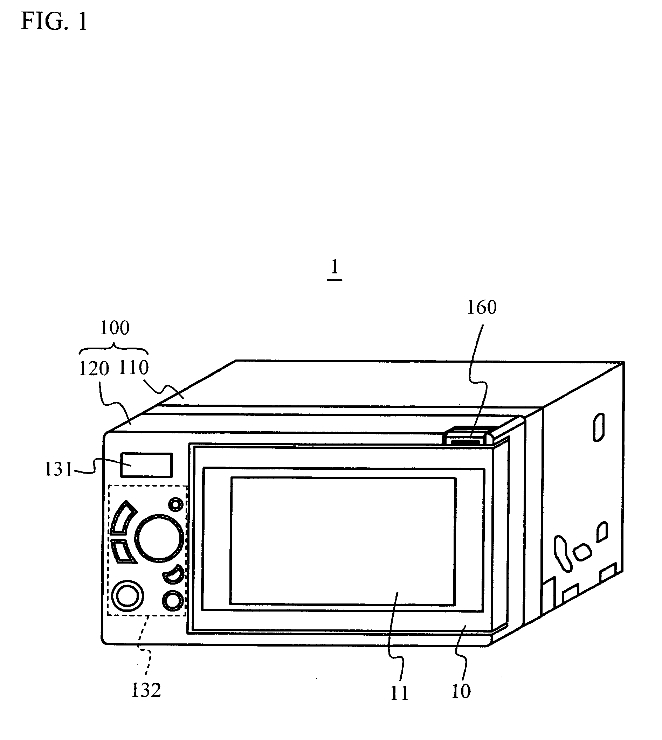

FIG. 1 is a diagram showing an exterior shape of a vehicle-mounted system including a vehicle-mounted device as an example of an electronic device in accordance with a present embodiment.

As shown in FIG. 1, the vehicle-mounted system 1 is composed of: a vehicle-mounted device 100 (an electronic device) to be mounted in a vehicle; and a portable device 10 (a portable device) with navigation capabilities. The portable device 10 can be used after being attached at a front face portion 120 of the vehicle-mounted device 100, and can be also used alone after being detached from the vehicle-mounted device 100.

The vehicle-mounted device 100 has a playing function of radio broadcasting and a playing function of music data and video data recorded on a recording medium such as a CD (Compact Disk) and a DVD (Digital Versatile Disk). Also, the vehicle-mounted device 100 includes: a main unit 110 having a player of the recording medium and an insertion/ejection slot of the recording medium; and the front face portion 120 (a cover member) having a display unit 131 and an operating unit 132. The portable device 10 has navigation capabilities of searching for a guiding path to a destination and displaying the searched guiding path over a map.

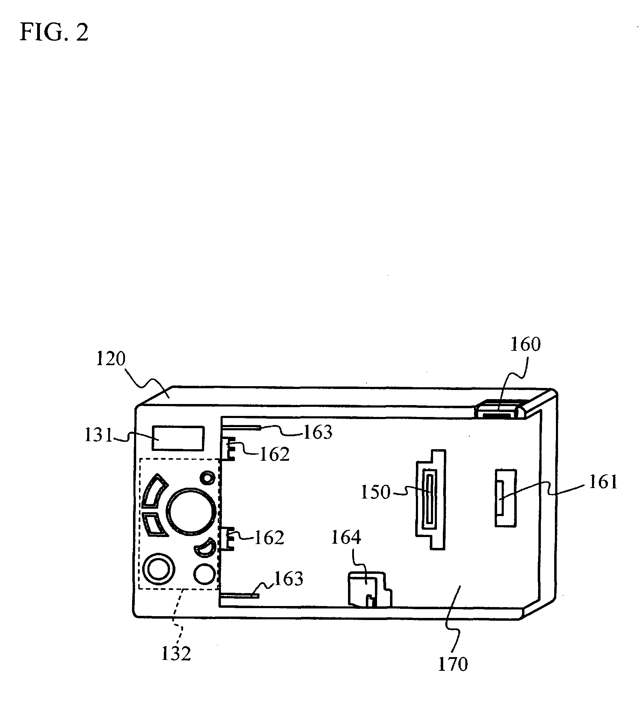

FIG. 2 is a diagram showing the front face portion 120 of the vehicle-mounted device 100 from which the portable device 10 is detached.

There is provided an attached/detached unit 170 in which a recess portion is formed for attaching the portable device 10, at the front face portion 120 of the vehicle-mounted device 100. The attached/detached unit 170 is provided with: a connector 150 for electrically coupling the vehicle-mounted device 100 and the portable device 10; a lock unit 161 and ribs 162 for securing the portable device 10 to the front face portion 120; slopes 163 for guiding an end of the portable device 10 to the ribs 162; and a push-out unit 164 for pushing out the portable device 10 from a back direction to a front direction. When a detach button 160 provided at the front face portion 120 is operated, a lock unit 161 is unlocked and the portable device 10 is detachable from the vehicle-mounted device 100.

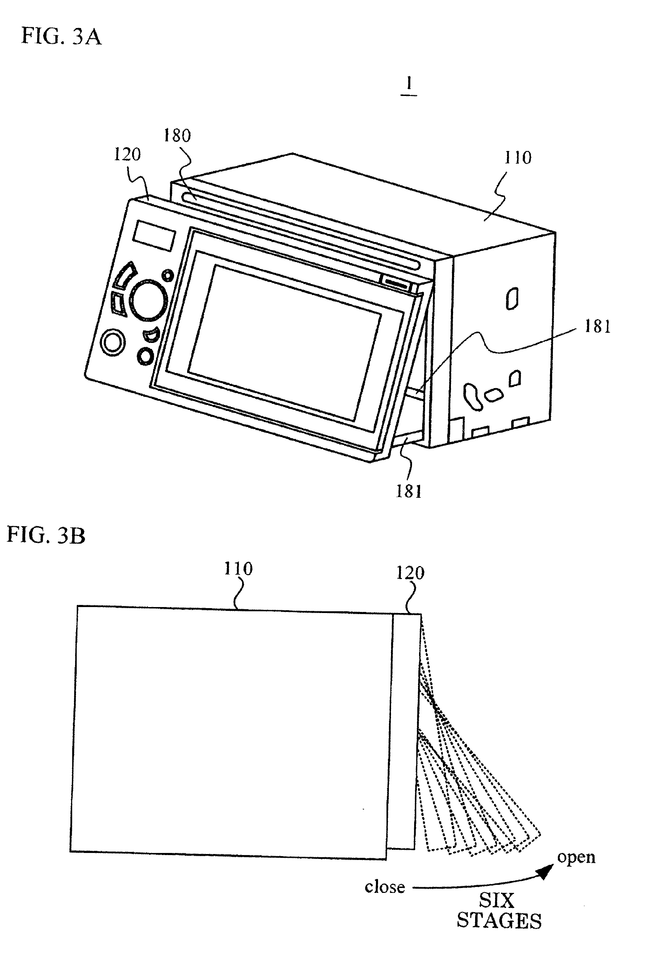

FIG. 3A is a diagram showing a state of tilting the front face portion 120 against the main unit 110 to expose an insertion/ejection slot 180. FIG. 3B is a diagram showing a state where the front face portion 120 and the main unit 110 are seen from a side of a left-side face.

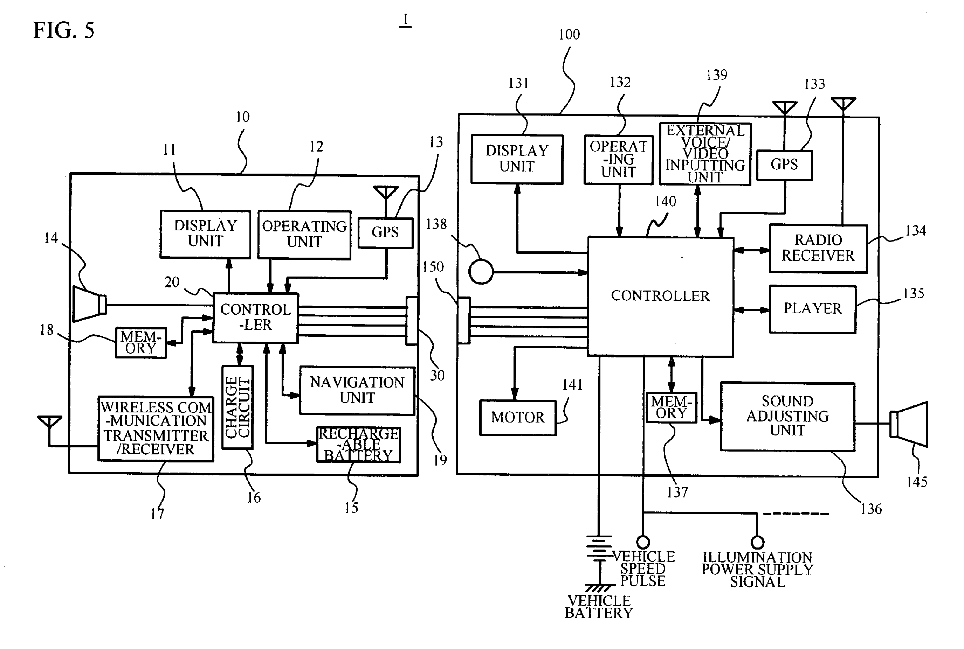

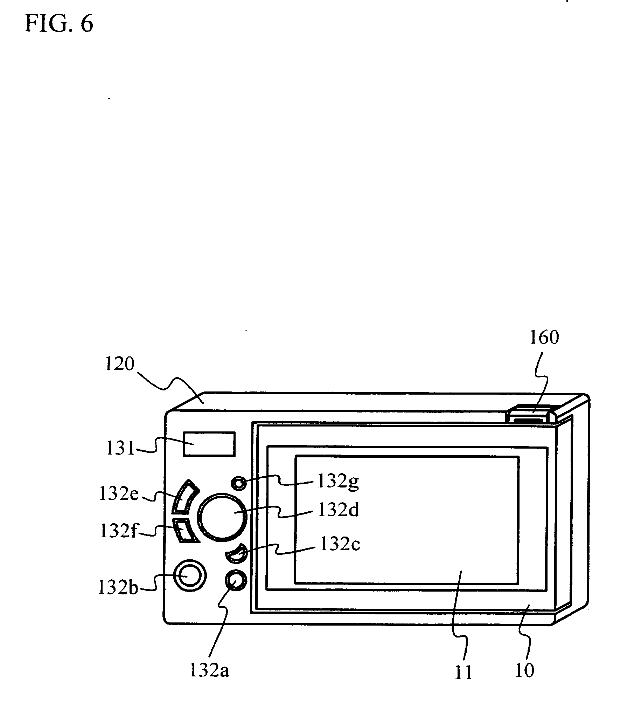

By driving a slider 181 shown in FIG. 3A with a motor (specifically, a motor 141 in FIG. 5), not shown, the front face portion 120 can be tilted against the main unit 110. By tilting operation, the insertion/ejection slot 180 provided in the main unit 110 is exposed, so that the recording medium can be inserted or ejected. There is provided an operation button (a tilt/eject button 132a shown in FIG. 6), at the front face portion 120 of the vehicle-mounted device 100, and a tilt angle can be set according to the operation of the button. When the tilt/eject button 132a is short depressed (i.e., depression for less than 0.8 seconds), a current mode is shifted to an eject mode, and the front face portion 120 comes to an opened state or a closed state. When the tilt/eject button 132a is long depressed (i.e., depression for 0.8 seconds or more), the current mode is shifted to a tilt mode, and the front face portion 120 is tilted against the main unit 110. When the tilt/eject button 132a is repeatedly long depressed, the front face portion 120 changes a tilt angle with six stages against the main unit 110 so that the front face portion 120 comes to the opened state (see FIG. 3B).

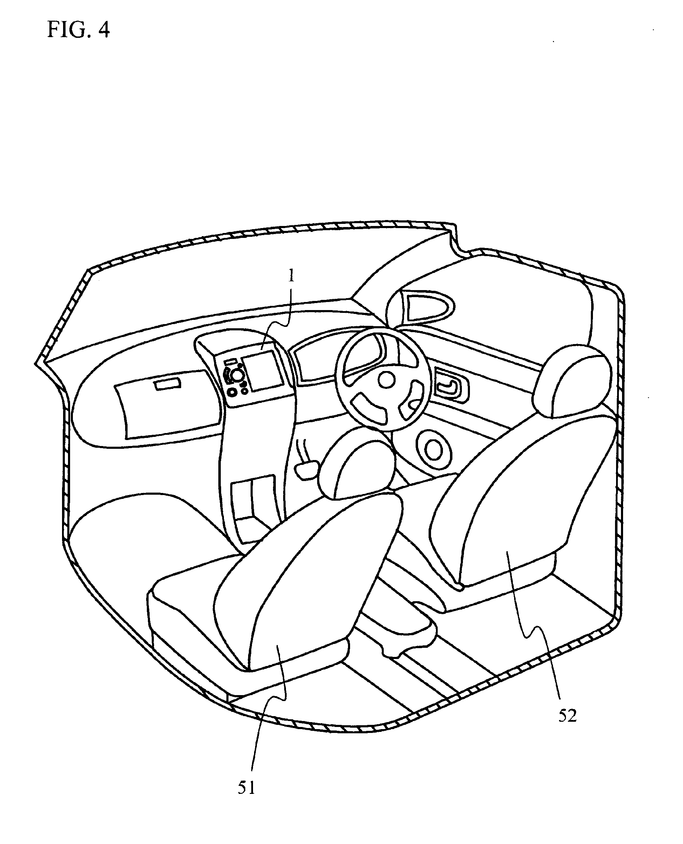

FIG. 4 is a diagram showing an example of mounting the vehicle-mounted system 1 in the vehicle.

The in-vehicle system 1 may be disposed in a dashboard portion substantially in the middle of a front-passenger's seat 51 and a driver's seat 52, as shown in FIG. 4, for example. A GPS antenna, not shown, in a GPS information receiver 133 described later is disposed on a dashboard or inside a front glass of the vehicle.

FIG. 5 is a block diagram showing a schematic configuration of the vehicle-mounted system 1.

The vehicle-mounted device 100 and the portable device 10 are electrically connected by connectors. The connector 150 is provided at a side of the vehicle-mounted device 100, and a connector 30 is provided at the portable device 10. By connecting the connectors 150 and 30, various signals are sent and received between the vehicle-mounted device 100 and the portable device 10 to function as the vehicle-mounted system 1. The connectors 150 and 30 are respectively provided with power supply terminals for supplying power to the portable device 10 from a battery of the vehicle. When the portable device 10 is connected to the vehicle-mounted device 100 and the power is supplied to the vehicle-mounted device 100, the power is also supplied to the portable device 10 via the power supply terminals.

The vehicle-mounted device 100 is provided with: the display unit 131; the operating unit 132; the GPS information receiver 133; a radio receiver 134; a player 135; a sound adjusting unit 136 (sound output portion); a memory 137; a microphone 138; an external voice/video inputting unit 139; a controller 140 (first detection portion, second detection portion, control portion, and sound output portion); a motor 141 (driving portion); and the connector 150. The vehicle-mounted device 100 is activated by supplying the power from the battery of the vehicle, when the engine key is positioned at Acc (Accessory) or IG (Ignition).

The display unit 131 is provided with a liquid crystal panel and a backlight, and displays a frequency of the received broadcasting, a track number of music being reproduced, a music name being reproduced, and the like.

The operating unit 132 inputs an operation instruction for changing the operation mode of the vehicle-mounted device 100, and an operation instruction for operating in various modes that have been changed. The operating unit 132 is provided with: the tilt/eject button 132a (instruction portion) for tilting the front face portion 120; a band/tune button 132b for changing a frequency band of the radio to be reproduced or a track number of the recording medium to be reproduced; a TEXT button 132c for changing a title displayed on the display unit 131; a SCREEN button 132d for changing an image displayed on a display unit 11 to any one of a navigation image or the video of the DVD, or for adjusting volume; a SOURCE/PWR button 132e for changing a source to be reproduced or for turning on/off the power of the vehicle-mounted device 100; a CONTROL button 132f for controlling tone quality; a MUTE/SCREENOFF button 132g for cutting audio or for turning on/off display of the display unit 11, as shown in FIG. 6. All of the tilt/eject button 132a, the band/tune button 132b, the TEXT button 132c, the SCREEN button 132d, the SOURCE/PWR button 132e, the CONTROL button 132f, and the MUTE/SCREENOFF button 132g are buttons composed of hardware.

Referring back to FIG. 5, the GPS information receiver 133 includes a GPS antenna and a tuner, and receives GPS signals from a satellite. The GPS signal received by the GPS information receiver 133 is output through the controller 140, the connector 150, the connector 30, and a controller 20, to a navigation unit 19 of the portable device 10, and then the position of the vehicle in which the vehicle-mounted device 100 having the portable device 10 therein is determined based on the GPS signal.

The radio receiver 134 has an antenna and a tuner, receives broadcast waves such as AM broadcasting, FM broadcasting, and sound multiplex broadcasting, outputs stereo audio signals, receives and demodulates multiplex data, and outputs the demodulated signal to the controller 140.

The player 135 reproduces the audio data and the video data recorded in the recording medium such as the CD and the DVD, and outputs the reproduced signal to the controller 140.

Herein, the demodulated signal output from the radio receiver 134 may be output to the sound adjusting unit 136, described later, without through the controller 140.

The sound adjusting unit 136 implements signal processing such as volume control or tone control on an audio signal received or demodulated by the radio receiver 134 or the audio signal reproduced by the player 135, and then outputs the processed signal to a speaker 145 (sound output portion).

The memory 137 may be composed of a RAM (Random Access Memory) from which data is readable and into which data is writable, and temporarily stores information necessary for control. The microphone 138 is provided for hands-free communication, and takes in user's voices in the vehicle.

The external voice/video inputting unit 139 is provided with a connection terminal with an external device such as a USB memory or a portable audio device, so that an audio signal or data from the external device may be input. The external voice/video inputting unit 139 then sends the signal or data to the controller 140, and outputs an audio signal, data, or the like to the connected external device.

The controller 140 controls the radio receiver 134, the player 135, and the sound adjusting unit 136, according to the operation by means of the operating unit 132. Also, the controller 140 outputs various signals through the connector 150 to the portable device 10, and controls the vehicle-mounted device 100 on the basis of various signals input from the portable device 10. For example, the controller 140 outputs the GPS signal received by the GPS information receiver 133 and an audio signal input by the microphone 138, to the portable device 10 through the connector 150.

Moreover, the controller 140 controls operation of the motor 141 for tilting the front face portion 120 against the main unit 110 when the tilt/eject button 132a in FIG. 6, described later, is depressed.

Here, the audio signal input by the microphone 138 may be output to the portable device 10 through the connector 150, without through the controller 140.

Further, the controller 140 acquires an operation signal corresponding to a menu image of various modes displayed on the display unit 11 of the portable device 10, from the controller 20 of the portable device 10, and then controls the radio receiver 134 and the player 135.

Also, the power is supplied to the controller 140 from the battery mounted in the vehicle. When the portable device 10 is connected, the controller 140 outputs the power supplied from the battery to the portable device 10. Here, a vehicle speed pulse and an illumination power supply signal are input into the controller 140 from a vehicle. The controller 140 transfers such input vehicle speed pulse to the controller 20 of the portable device 10. Meanwhile, the vehicle speed pulse may be configured not to be input into the vehicle-mounted device 100.

Next, a description will be given of the portable device 10. The portable device 10 is provided with: the display unit 11; an operating unit 12; the GPS information receiver 13; a speaker 14; a rechargeable battery 15; a charge circuit 16; a wireless communication transmitter/receiver 17; a memory 18; the navigation unit 19; the controller 20; and the connector 30.

The display unit 11 is provided with a liquid crystal panel and a backlight, and is capable of displaying map information generated by the navigation unit 19 and guiding path information to a destination, the received broadcasting frequency transferred from the vehicle-mounted device 100, a music track number being played, a music name being played, and the like.

Here, the display units 11 and 131 may employ a flat panel display other than the liquid crystal panel. For example, an organic light emitting display panel, a plasma display panel, a cold-cathode flat panel display, or the like may be employed.

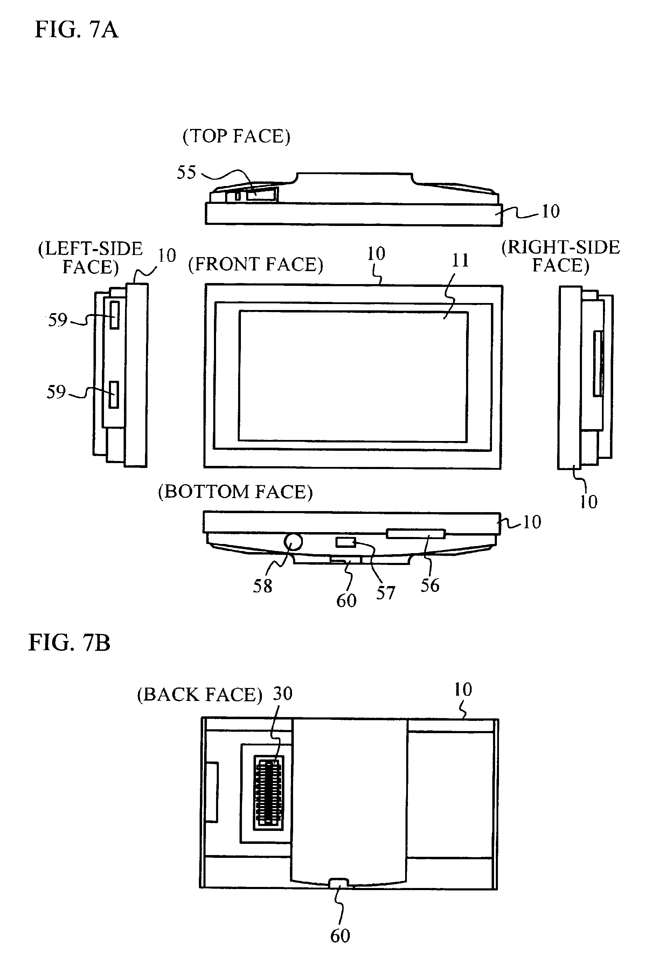

The operating unit 12 includes a touch panel and a power button 55 (see FIG. 7A) for powering on and off the portable device 10. The touch panel may be, for example, disposed over the display screen of the display unit 11. When the touch panel is touched by a finger or a dedicated pen, the touched position is detected to determine whether or not there is an input operation. The power button 55 will be described later.

The GPS information receiver 13 includes an antenna and a tuner, and receives the GPS signal from a satellite. The received GPS signal is output to the navigation unit 19, and the vehicle location is detected based on the GPS signal. Meanwhile, the vehicle-mounted device 100 is also provided with the GPS information receiver 133. However, when the portable device 10 is attached to the vehicle-mounted device 100, the location of the vehicle in which the vehicle-mounted device 100 having the portable device 10 therein is mounted is specified by use of the GPS signal (and the vehicle speed pulse) received by the GPS information receiver 133. When the portable device 10 is used alone, the location thereof is specified by use of the GPS signal received by the GPS information receiver 13.

The speaker 14 is provided for outputting the audio information of the navigation unit 19, and outputs the audio information only when the portable device 10 is detached from the vehicle-mounted device 100, namely, used alone separately as a single unit.

The rechargeable battery 15 supplies power to each unit of the portable device 10 in a state where the portable device 10 is detached from the vehicle-mounted device 100. When the portable device 10 is attached to the vehicle-mounted device 100, the power is supplied through the power supply terminals of the connector 30 from the battery of the vehicle, and hence the rechargeable battery 15 is charged by the charge circuit 16. Also, the charge circuit 16 is supplied with the power from the connection terminal through a USB slot 57 (see FIG. 7A), and the rechargeable battery 15 can be charged.

The wireless communication transmitter/receiver 17 sends and receives the voice on communication over a mobile phone, and acquires the information used for navigation over the mobile phone. For example, Bluetooth, which is a wireless transmission system at 2.4 GHz band, is used for the wireless communication transmitter/receiver 17.

The memory 18 may be a RAM from which data is readable and into which the data is writable, and temporarily stores the information read for each control.

The navigation unit 19 includes a map information storing unit that acquires map information used for navigation from an SD (Secure Digital) card or an embedded memory, and stores therein, determines current location information with the GPS signal from the GPS information receiver 133 or 13, and creates a map image for navigation. The created map image may be displayed on the display unit 11. In addition, when the vehicle-mounted device 100 and the portable device 10 are connected, the vehicle speed pulse is acquired from the vehicle so that the accuracy of the location detection of the vehicle in which the vehicle-mounted device 100 having the portable device 10 therein is mounted can be improved. Also, the map information may be retained in the portable device 10.

The controller 20 controls each unit of the portable device 10. Also, the controller 20 outputs various signals to the vehicle-mounted device 100 through the connector 30, and controls the portable device 10 based on various signals input from the vehicle-mounted device 100. For example, the controller 20 acquires the GPS signal received by the GPS information receiver 133 of the vehicle-mounted device 100 and the vehicle speed pulse from the controller 140 of the vehicle-mounted device 100, and outputs the GPS signal and the vehicle speed pulse to the navigation unit 19. Also, the controller 20 acquires the audio signal input by the microphone 138 of the vehicle-mounted device 100 from the controller 140 of the vehicle-mounted device 100, and controls the navigation unit 19 according to the acquired audio signal. That is to say, the navigation unit 19 can be operated in a hands-free manner. The voice on communication over the mobile phone connected to the wireless communication transmitter/receiver 17 is output to a vehicle-mounted device side through the connector 30, and is caused to output from the speaker 145 of the vehicle-mounted device 100. The operation signal on the menu screen or content screen displayed on the display unit 11 is output to the controller 140 of the vehicle-mounted device 100 through the connector 30. The controller 140 controls the radio receiver 134 or the player 135 according to the operation signal transmitted from the controller 20 of the portable device 10.

FIG. 7A shows a front view, a top view, a bottom view, a left-side view, and a right-side view of the portable device, and FIG. 7B shows a back view of the portable device.

On the top face of the portable device 10, there is provided with the power button 55 for turning on or off the power of the portable device. On the bottom face of the portable device 10, there is provided with: an SD memory card slot 56; a USB slot 57; and an earphone jack 58. On the left-side face of the portable device 10, there is provided with recess portions 59 housing the ribs 162 in FIG. 2. On the back face of the portable device 10, there is provided with the connector 30 for electrically connecting the vehicle-mounted device 100. On the bottom face and the back face of the portable device 10, there is further provided with a latch unit 60 latched with the push-out unit 164 in FIG. 2.

By inserting the SD card or a USB memory, into which the map information is stored, into the SD memory card slot 56 or the USB slot 57, respectively, the controller 20 reads out the map information from the SD card or the USB memory and outputs the map information to the navigation unit 19.

The power of the portable device 10 is turned on or off by the control from the vehicle-mounted device 100, when the portable device 10 is attached to the vehicle-mounted device 100. Also, the power is operated on the basis of on or off operation of the power button 55, when the portable device 10 is detached from the vehicle-mounted device 100 and used alone separately.

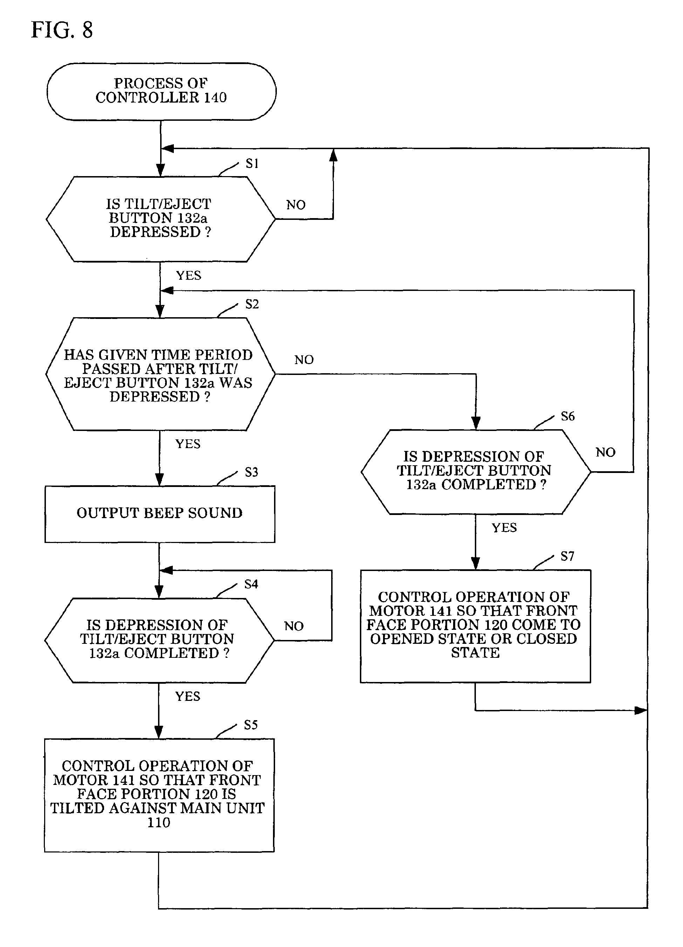

FIG. 8 is a flowchart showing a process which the controller 140 executes.

First, the controller 140 judges whether the tilt/eject button 132a is depressed (step S1). Specifically, when the controller 140 receives a signal by the depression (e.g. a pulse signal with a high level) from the tilt/eject button 132a, the controller 140 judges that the tilt/eject button 132a is depressed.

Next, when the answer to the judgment of step S1 is NO, the procedure of step S1 is repeatedly executed. On the other hand, when the answer to the judgment of step S1 is YES, the controller 140 judges whether a given time period (e.g. 0.8 seconds or more) has passed after the tilt/eject button 132a was depressed (step S2).

When the answer to the judgment of step S2 is YES (i.e., when the tilt/eject button 132a is long depressed), the controller 140 outputs a beep sound via the sound adjusting unit 136 and the speaker 115 (step S3). This reason is to notify the user that the tilt operation can begin, and to prompt the user to stop depressing the tilt/eject button 132a. Thereby, the user is prevented from keeping depressing the tilt/eject button 132a indefinitely. Here, the sound output via the sound adjusting unit 136 and the speaker 115 is not limited to the beep sound, but may be a guide sound, an alarm sound, or the like.

Next, the controller 140 judges whether a user's finger is separated from the tilt/eject button 132a, i.e., the depression of the tilt/eject button 132a is completed (step S4).

When the answer to the judgment of step S4 is NO, the procedure of step S4 is repeatedly executed. On the other hand, when the answer to the judgment of step S14 is YES, the controller 140 controls operation of the motor 141 so that the front face portion 120 is tilted against the main unit 110 (step S5). The procedure returns to step S1.

When the answer to the judgment of step S2 is NO (i.e., when the tilt/eject button 132a is short depressed), the controller 140 judges whether a user's finger is separated from the tilt/eject button 132a, i.e., the depression of the tilt/eject button 132a is completed (step S6).

When the answer to the judgment of step S6 is NO, the controller 140 controls operation of the motor 141 so that the front face portion 120 comes to the opened state or the closed state (step S7). The procedure returns to step S1. In step S7, when the current state of the front face portion 120 is in the opened state, the controller 140 controls the operation of the motor 141 so that the front face portion 120 comes to the closed state. In step S7, when the current state of the front face portion 120 is in the closed state, the controller 140 controls the operation of the motor 141 so that the front face portion 120 comes to the opened state.

As described above, according to the present embodiment, the controller 140 detects that the tilt/eject button 132a is long and short depressed (step S2), detects that the long depression is completed (YES in step S4), and controls the motor 141 so that the front face portion 120 operates against the main unit 110 after the long depression is completed (step S5). Therefore, after the long depression is completed, the front face portion 120 on which the tilt/eject button 132a is provided operates against the main unit 110, to thereby offer the user a comfortable operating environment of the tilt/eject button 132a.

Also, when the long depression is executed for the given time period or longer, the controller 140 outputs the sound via the sound adjusting unit 136 and the speaker 115. Therefore, the user can be prevented from keeping depressing the tilt/eject button 132a indefinitely.

Further, a function to input an instruction in which the motor 141 tilts the front face portion 120 against the main unit 110, and a function to input an instruction in which the front face portion 120 comes to the opened state or the closed state against the main unit 110, are assigned to the tilt/eject button 132a. The number of buttons to be provided for plural functions which the vehicle-mounted device 100 includes can be reduced.

Also, the controller 140 detects that the short depression is completed (step S6), and controls the motor 141 so that the front face portion 120 operates against the main unit 110 after the short depression is completed (step S7). Therefore, even when the tilt/eject button 132a is short depressed, it is possible to offer the user a comfortable operating environment of the tilt/eject button 132a.

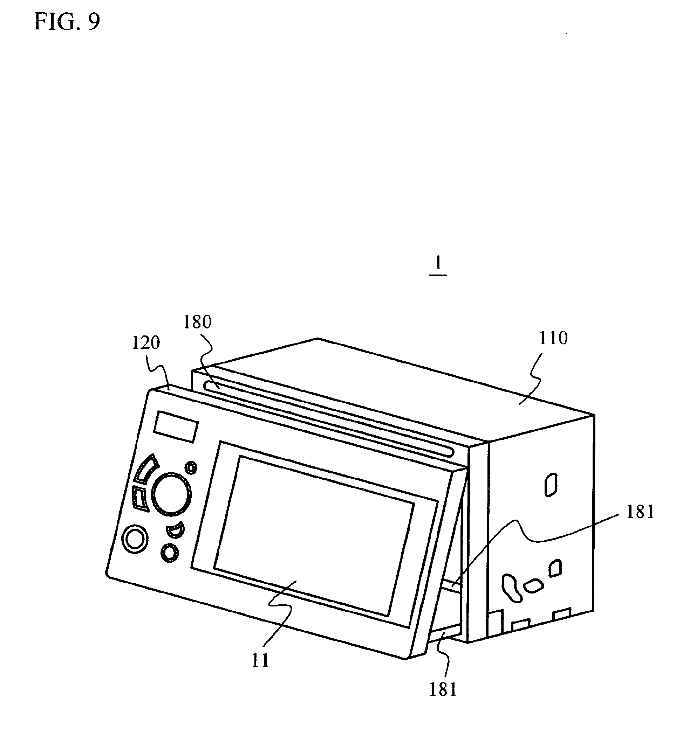

Although in the above-mentioned embodiment, the vehicle-mounted device 100 that can attach and detach the portable device 10 is used as an example of the electronic device, the present invention is not limited to this. For example, as shown in FIG. 9, the electronic device as a variation may be a navigation device (or a vehicle-mounted navigation device), an audio device (or a vehicle-mounted audio device), or the like that mounts no portable device 10 therein, and is capable of tilting the front face portion 120 against the main unit 110.

A recording medium on which the software program for realizing the functions of the vehicle-mounted device 100 is recorded may be supplied to the vehicle-mounted device 100, and the controller 140 may read and execute the program recorded on the recording medium. In this manner, the same effects as those of the above-described embodiment can be achieved. The recording medium for providing the program may be a CD-ROM, a DVD, or a SD card, for example.

Alternatively, the controller 140 of the vehicle-mounted device 100 may execute a software program for realizing the functions of the vehicle-mounted device 100, so as to achieve the same effects as those of the above-described embodiment.

It should be noted that the present invention is not limited to above-described embodiment, and various modifications may be made to it without departing from the scope of the invention.

## Claims

1. An electronic device (1), comprising:
a main unit (110);
a cover member (120) that is movable against the main unit (110);
an instruction portion (132, 132a) that inputs an operation instruction of the cover member (120) against the main unit (110);
a driving portion (181) that drives the cover member (120) based on the instruction input by the instruction portion (132, 132a);
a first detection portion (140) that detects whether the instruction portion (132, 132a) is long depressed or short depressed; and
a second detection portion (140) that detects that the long depression detected by the first detection portion (140) is completed; **characterized by** further comprising
a control portion (140) that controls the driving portion (181) so that the cover member (120) operates against the main unit (110) after the second detection portion (140) has detected that the long depression detected by the first detection portion (140) is completed; and in that
the instruction portion (132, 132a) is provided on the cover member (120).

2. The electronic device (1) as claimed in claim 1, **characterized in that** the instruction portion (132, 132a) inputs the operation instruction of the cover member (120) against the main unit (110) by contact or depression of a user, and is provided on the cover member (120) so as to be opposed to the contact or depression of the user.

3. The electronic device (1) as claimed in claim 1 or 2, **characterized by** comprising a sound output portion (145) that outputs a sound to notify a user that movement of the cover member (120) can begin and to prompt the user to stop depressing the instruction portion (132, 132a), when the long depression detected by the first detection portion (140) is executed for a given time period or longer.

4. The electronic device (1) as claimed in any one of claims 1 to 3, **characterized in that**, a function to input an instruction in which the driving portion (181) tilts the cover member (120) against the main unit (110) with plural stages, and a function to input an instruction in which the cover member (120) comes to an opened state or a closed state against the main unit (110), are assigned to the instruction portion (132, 132a).

5. The electronic device (1) as claimed in any one of claims 1 to 4, **characterized in that**, the second detection portion (140) detects that the short depression detected by the first detection portion (140) is completed, and the control portion (140) controls the driving portion (181) so that the cover member (120) operates against the main unit (110) after the short depression is completed.

## Patentansprüche

1. Elektronische Vorrichtung (1), umfassend
eine Haupteinheit (110);
ein Abdeckbauteil (120), das gegenüber der Haupteinheit (110) beweglich ist;
einen Befehlsabschnitt (132, 132a), der einen Betriebsbefehl des Abdeckbauteils (120) gegenüber der Haupteinheit (110) eingibt;
einen Antriebsabschnitt (181), der das Abdeckbauteil (120) antreibt auf der Basis des vom Befehlsabschnitt (132, 132a) eingegebenen Befehls;
einen ersten Erfassungsabschnitt (140), der erfasst, ob der Befehlsabschnitt (132, 132a) lang eingedrückt ist oder kurz eingedrückt; und
einen zweiten Erfassungsabschnitt (140), der erfasst, dass das vom ersten Erfassungsabschnitt (140) erfasste lange Eindrücken abgeschlossen ist; **gekennzeichnet dadurch, dass** sie zudem umfasst
einen Steuerungsabschnitt (140), der den Antriebsabschnitt (181) steuert, so dass das Abdeckbauteil (120) gegen die Haupteinheit (110) arbeitet, nach-dem der zweite Erfassungsabschnitt (140) erfasst hat, dass das vom ersten Erfassungsabschnitt (140) erfasste lange Eindrücken abgeschlossen ist, und dadurch, dass
der Befehlsabschnitt (132, 132a) auf dem Abdeckbauteil (120) bereitgestellt wird.

2. Elektronische Vorrichtung (1) gemäß Anspruch 1, **dadurch gekennzeichnet, dass** der Befehlsabschnitt (132, 132a) den Betriebsbefehl des Abdeckabschnitts (120) gegen die Haupteinheit (110) durch Berührung oder Eindrücken eines Nutzers eingegeben wird, und auf dem Abdeckbauteil (120) bereitgestellt wird, so dass er der Berührung oder dem Eindrücken durch den Nutzer entgegensteht.

3. Elektronische Vorrichtung (1) gemäß Anspruch 1 oder 2, **dadurch gekennzeichnet, dass** er einen Tonausgabeabschnitt (145) umfasst, der einen Ton ausgibt, um einen Nutzer zu informieren, dass Bewegung des Abdeckabschnitts (120) beginnen kann und um den Nutzer zu veranlassen, mit dem Eindrücken des Befehlsabschnitts (132, 132a) aufzuhören, wenn das vom ersten Erfassungsabschnitt (140) erfasste lange Eindrücken während einer bestimmten Zeitspanne oder länger ausgeführt wird.

4. Elektronische Vorrichtung (1) gemäß irgendeinem der Ansprüche 1 bis 3, **dadurch gekennzeichnet, dass** eine Funktion zum Eingeben eines Befehls, in welchem ein Antriebsabschnitt (181) das Abdeckbauteil (120) mit mehreren Stufen gegen die Haupteinheit (110) neigt, und eine Funktion zum Eingeben eines Befehls, dass das Abdeckbauteil (120) gegenüber der Haupteinheit (110) in einen geöffneten Zustand oder einen geschlossenen kommt, dem Befehlsabschnitt (132, 132a) zugeordnet werden.

5. Elektronische Vorrichtung (1) gemäß irgendeinem der Ansprüche 1 bis 4, **dadurch gekennzeichnet, dass** der zweite Erfassungsabschnitt (140) erfasst, dass das vom ersten Erfassungsabschnitt (140) erfasste kurze Eindrücken abgeschlossen ist, und dass der Steuerungsabschnitt (140) den Antriebsabschnitt (181) so steuert, dass das Abdeckbauteil (120) gegen die Haupteinheit (110) arbeitet, nachdem das kurze Eindrücken abgeschlossen ist.

## Revendications

1. Un dispositif électronique (1), comprenant :
une unité principale (110),
un élément de couverture (120) qui est déplaçable contre l'unité principale (110),
une partie instruction (132, 132a) qui entre une instruction d'actionnement de l'élément de couverture (120) contre l'unité principale (110),
une partie entraînement (181) qui entraîne l'élément de couverture (120) en fonction de l'instruction entrée par la partie instruction (132, 132a),
une première partie détection (140) qui détecte si la partie instruction (132, 132a) est enfoncée long ou enfoncée court, et
une deuxième partie détection (140) qui détecte que l'enfoncement long détecté par la première partie détection (140) est achevé, **caractérisé en ce qu'**il comprend en outre
une partie commande (140) qui commande la partie entraînement (181) de sorte que l'élément de couverture (120) agit contre l'unité principale (110) après que la deuxième partie détection (140) ait détecté que l'enfoncement long détecté par la première partie détection (140) est achevé, et **en ce que**
la partie instruction (132, 132a) est placée sur l'élément de couverture (120).

2. Le dispositif électronique (1) selon la revendication 1, **caractérisé en ce que** la partie instruction (132, 132a) entre l'instruction d'actionnement de l'élément de couverture (120) contre l'unité principale (110) par un contact ou un enfoncement effectué par un utilisateur, et est placée sur l'élément de couverture (120) de façon à être opposée au contact ou l'enfoncement de l'utilisateur.

3. Le dispositif électronique (1) selon la revendication 1 ou 2, **caractérisé en ce qu'**il comprend une partie sortie acoustique (145) qui produit un son destiné à notifier un utilisateur qu'un déplacement de l'élément de couverture (120) peut débuter et à inviter l'utilisateur à arrêter d'enfoncer la partie instruction (132, 132a) lorsque l'enfoncement long détecté par la première partie détection (140) est exécuté pendant une période de temps donnée ou plus longtemps.

4. Le dispositif électronique (1) selon l'une quelconque des revendications 1 à 3, **caractérisé en ce qu'**une fonction d'entrée d'une instruction, dans laquelle la partie entraînement (181) incline l'élément de couverture (120) contre l'unité principale (110) avec une pluralité d'étages, et une fonction d'entrée d'une instruction, dans laquelle l'élément de couverture (120) atteint un état ouvert ou un état fermé contre l'unité principale (110), sont attribuées à la partie instruction (132, 132a).

5. Le dispositif électronique (1) selon l'une quelconque des revendications 1 à 4, **caractérisé en ce que** la deuxième partie détection (140) détecte que l'enfoncement court détecté par la première partie détection (140) est achevé, et la partie commande (140) commande la partie entraînement (181) de sorte que l'élément de couverture (120) agit contre l'unité principale (110) une fois l'enfoncement court achevé.
